(19) Europäisches Patentamt
European Patent Office
Office européen des brevets

(11) Publication number: **0 066 405**
**B1**

(12) **EUROPEAN PATENT SPECIFICATION**

(45) Date of publication of patent specification: **10.04.85**

(21) Application number: **82302508.5**

(22) Date of filing: **18.05.82**

(51) Int. Cl.[4]: **C 09 B 67/32,** C 09 B 67/34, C 09 B 69/06, D 06 P 1/41

(54) **Process for the production of water-soluble powders or concentrated solutions of cationic dyes.**

(30) Priority: **30.05.81 GB 8116609**

(43) Date of publication of application:
**08.12.82 Bulletin 82/49**

(45) Publication of the grant of the patent:
**10.04.85 Bulletin 85/15**

(84) Designated Contracting States:
**DE FR GB IT**

(56) References cited:
**CH-A-579 125**
**DE-A-2 359 515**
**FR-A-1 508 131**
**FR-A-1 595 309**
**FR-A-2 167 899**
**FR-A-2 413 445**

(73) Proprietor: **YORKSHIRE CHEMICALS LIMITED**
**Kirkstall Road**
**Leeds LS3 1LL (GB)**

(72) Inventor: **Jackson, Malcolm Stewart**
**16 Langdale Close**
**Wetherby West Yorkshire, LS22 7YE (GB)**
Inventor: **Varley, John Howard**
**12 Silver Birch Avenue Wyke Lane**
**Bradford, BD12 9EP (GB)**

(74) Representative: **McCall, John Douglas et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 066 405 B1

**Description**

The present invention relates to a process for the preparation of cationic dyes in the form of a water-soluble solid or a concentrated solution.

The desirable commercial forms of cationic dyes are (i) water-soluble (preferably easily wettable) solids, preferably easily wettable, non-dusting, highly soluble powders or (ii) stable concentrated solutions (preferably aqueous solutions optionally containing organic solvents). There are known a number of processes for producing such commercially desirable forms which depend upon effecting an exchange of the dye anion. It is known that the nature of the dye anion can markedly effect the solubility of the dye, for example the mineral acid salts or cationic dyes are often poorly soluble, whereas the organic acid salts are often highly soluble.

Known processes which effect ion exchange may be direct or indirect. For example, direct methods include treatment of a solution of the dye sulphate or chloride in acetic acid with sodium acetate, barium carbonate or lead oxide with subsequent filtration to remove the precipitated metal sulphate or chloride. For example indirect methods involve the precipitation of the dye hydroxide or bicarbonate which may be isolated and reacted with an organic acid to produce a solution of the organic acid salt of the dye.

Both these methods involve difficult filtrations, the metal sulphate or chloride separating in finely divided form and the dye hydroxides or bicarbonates often separating as oils or resinous precipitates. When isolated, the dye hydroxides or bicarbonates are relatively unstable, particularly on drying at elevated temperatures and the process fails when applied to alkali sensitive dyes through degradation of the dye cation.

We have now discovered an indirect ion exchange process which may be applied with equal facility to alkali insensitive or alkali sensitive dyes, gives highly crystalline easily filterable precipitates which may be dried at elevated temperatures and which react readily with organic acids to produce stable concentrated solutions or, by subsequent evaporation, highly soluble solids, e.g. easily wettable powders.

According to the present invention therefore there is provided a process for the preparation of a cationic dye in the form of a water-soluble solid or a concentrated solution which comprises

(a) preparing a cyanate of a cationic dye

(b) isolating the dye cyanate

(c) reacting the dye cyanate with an organic acid

to produce a solution of the cationic dye salt of the organic acid, and optionally,

(d) converting the solution into a solid form.

The expression "solid form" includes all such solid forms e.g. cake form and granulate form but the most preferred solid form is a powder.

By the term dye cyanate is meant the salt which comprises a cationic dye cation and a cyanate anion.

Any cationic dye may be useable according to the present invention. Examples thereof may be drawn from a variety of chemical classes including dyes of the azo, anthraquinone, methine, azomethine, oxazine and quinophthalone series. The dyes are usually in the form of inorganic salts, are preferably soluble or partly soluble in water or organic aqueous solutions and are typically chlorides, bromides, bisulphates, sulphates, methosulphates, phosphates or metal halide salts.

The dye cyanate may conveniently be prepared by reacting an aqueous or organic aqueous solution or suspension of a cationic dye salt with a water soluble cyanate. The solution or suspension of the cationic dye salt may be prepared from isolated cationic dye salt or may result from the process of preparation of the cationic dye salt.

The water soluble cyanates are of the alkali metal or alkaline-earth metal series or ammonium cyanate and are preferably ammonium, sodium or potassium cyanate.

The reaction of the cationic dye salt with the water soluble cyanate may be carried out in a mixture of water and a water miscible organic solvent, but is preferably carried out in water at a temperature of 0—100°C, preferably 15—80°C, at a concentration of cationic dye salt of 2—80% w/v, preferably 5—50%.

The water soluble cyanate may be added as a solid or an aqueous solution optionally in excess of the stoichiometric amount to complete the precipitation of the cationic dye cyanate which separates directly as a crystalline precipitate or, in some cases separates as an oil which rapidly crystallises.

The cationic dye cyanate is readily isolated by filtration and subsequently reacted, either after drying or as a moist filter cake, with an organic acid in the presence of an organic solvent and/or water according to the reaction.

$$D^+CNO^- + 2H^+A^- + H_2O \rightarrow D^+A + NH_4^+A^- + CO_2$$

where $D^+$ is the dye cation and $A^-$ the anion of an organic acid.

Preferred organic acids useable according to this invention include mono and polycarboxylic acids, for example, formic acid, acetic acid, propionic acid, monochloracetic acid, acrylic acid, succinic acid, maleic acid, citric acid and lactic acid and sulphonic acids, preferably lower alkyl sulphonic acids, for example; methane or ethane sulphonic acid.

As examples of organic solvents there may be mentioned ethanol, isopropanol, ethylene glycol, propylene glycol, 2-methoxy ethanol 2-methoxy ethyl acetate, benzyl alcohol, dimethylacetamide or sulpholane.

The reaction occurs with evolution of carbon dioxide, and the formation of the cationic dye salt of the organic acid together with the ammonium salt of the organic acid.

The organic acid is chosen so that its ammonium salt is highly soluble in water and does not effect the stability of the dye solution.

The reaction is normally carried out at ambient temperature but may be accelerated by heating.

The dye solutions so obtained may be converted to water soluble solid form, e.g. powder, by a suitable drying process, for example, by spray drying.

The die in solution or solid form is suitable in particular for use in the dyeing and printing of polyacrylonitrile and acid modified polyesters and polyamides.

The dye solutions obtained according to this invention are distinguished by very good storage stability even at high concentrations and low temperatures.

The invention is further illustrated by the following examples.

Example 1

80 g of the cationic dye of formula

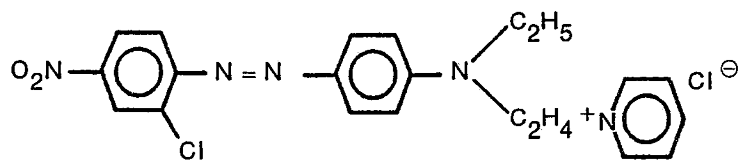

are stirred in 1000 ml water at 50—60°C until the dye dissolves, The temperature is adjusted to 30°C when a solution of 40 g potassium cyanate in 100 mls water is added over 20—30 minutes. The mixture is cooled to 25°C with stirring when the separated dye cyanate crystallises. The suspension is filtered off under suction and the cake washed with a solution of 10 g potassium cyanate in 200 mls water, the cake is pulled well down.

The moist filter cake is slurried in a mixture of 50 g water and 40 g ethylene glycol and 40 g of acetic acid are added gradually with stirring and stirring is continued until the evolution of carbon dioxide ceases.

There is thus obtained a stable concentrated solution of the cationic dye which may be used directly.

A liquid of greater tinctorial strength may be obtained by drying the isolated dye cyanate for several hours at 50°C.

Example 2

If 80 g of the cationic dye of formula ($A^-$ represents a bisulphate anion)

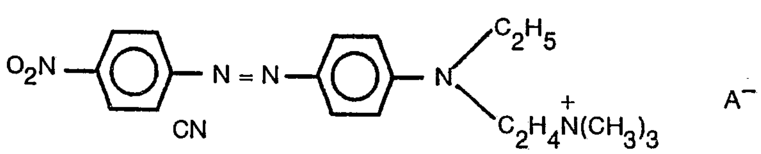

are treated in the manner described in Example 1 there is obtained a stable concentrated solution of the dye of above formula where $A^-$ represents an acetate ion.

Example 3

13.5 g of a dye base of formula

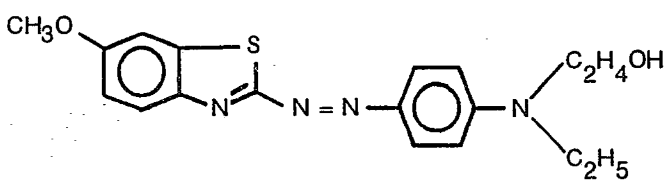

are stirred in 60 ml water at 20°C. 1.5 g magnesium oxide are added and 15 mls dimethyl sulphate are added portionwise. The mixture is stirred for several hours until the quaternisation is complete when the temperature is raised to 70°C for 1 hour. The solution is cooled and diluted to 600 ml with water and the pH adjusted to 6 with magnesium oxide.

10 g of sodium cyanate are added and the precipitated dye of formula

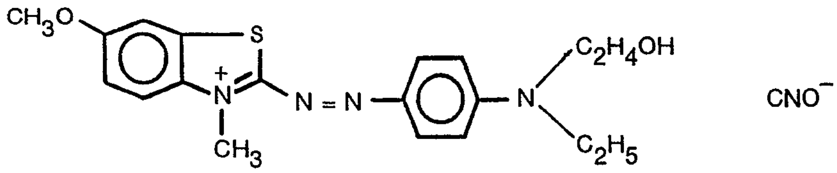

is filtered off and the moist cake slurried in a mixture of 20 g propylene glycol and 20 g sulpholane.

Propionic acid is added portionwise until effervescence ceases. The resulting solution may be further diluted with water to the required strength.

A liquid of greater tinctorial strength may be obtained by drying the isolated dye cyanate for several hours at 50°C.

Example 4

40 g of a dye of formula

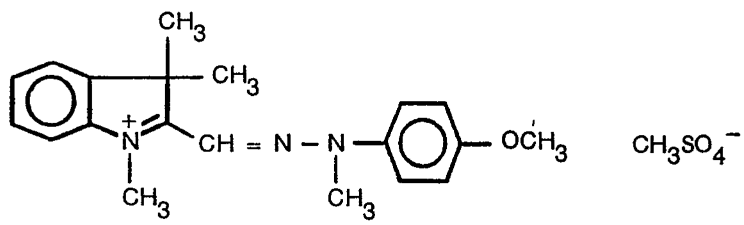

are stirred in 1000 ml water at 55°C when 10 g potassium cyanate are added portionwise. The mixture is filtered and washed with a little potassium cyanate solution. The moist filter cake is added portionwise to 40 g formic acid to yield a clear solution of the dye formate.

Example 5

If the dye in Example 4 is replaced by a dye of formula

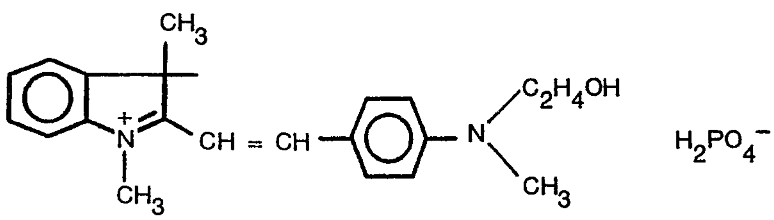

and the precipitated dye cyanate is slurried in 40 g 2-methoxyethanol and 40 g water and treated with 20 g monochloroacetic acid there is similarly obtained a clear concentrated solution.

Example 6

20 g of a dye of formula

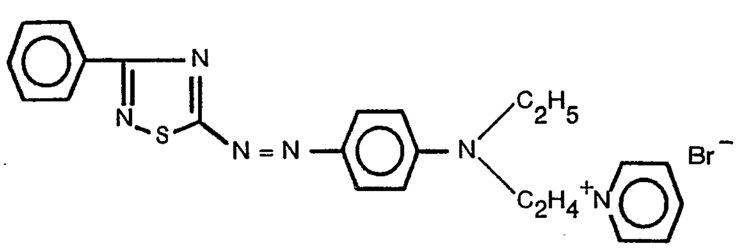

are stirred in 1000 ml water at 70°C when 8 g ammonium cyanate are added gradually. On cooling below 20°C the initially oily precipitate crystallises and is filtered off.

The moist filter cake is treated with 10 g of propionic acid and the mixture warmed to 30°C. When effervescence ceases the solution is evaporated to dryness and the residue ground up to give a dye powder of much greater solubility than the original dye.

Example 7

20 g of a dye of formula

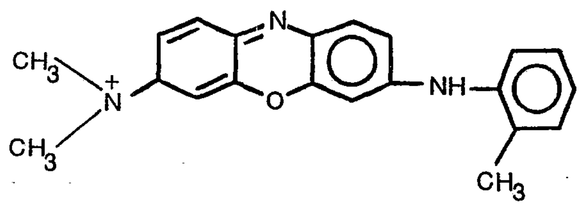

Cl⁻

are stirred in 500 mls water at 60°C until dissolved. 10 g of sodium cyanate are added gradually and the mixture cooled to room temperature. The precipitated dye cyanate is filtered off and the moist cake is slurried in a solution of 20 g of ethylene glycol and 20 g water. 10 g acetic acid are added and the mixture warmed gently to 60°C until effervescence ceases. The solution is cooled and screened to give a clear concentrated dye solution.

Example 8

Dyebaths are prepared from any one of the dye solutions or powders from Examples 1 to 7 by adding 1 part of the dye solution or powder to 2000 parts of water containing one part of 80% acetic acid and two parts of sodium acetate crystals. 100 parts of polyacrylonitrile yarn are introduced into the dyebath at room temperature and the temperature is raised to 100°C over 1 hour and maintained for two hours. After this time the dyed yarn is cooled, rinsed and dried.

The following table gives further examples of cationic dyes which may be converted to water soluble powders or concentrated solutions, and used, in accordance with the general methods illustrated in the foregoing Examples.

| Example No. | Dye | Cyanate salt | Organic Acid | Solvent or Solvent Mixture |
|---|---|---|---|---|
| 9 | 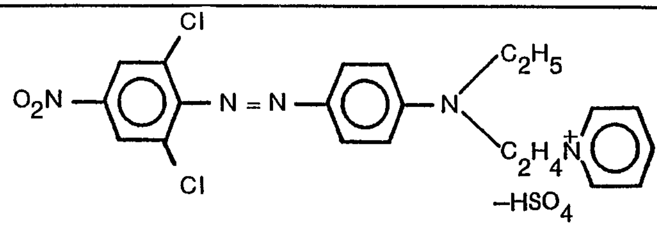 | Potassium Cyanate | Acetic Acid | Ethylene glycol/water |
| 10 | 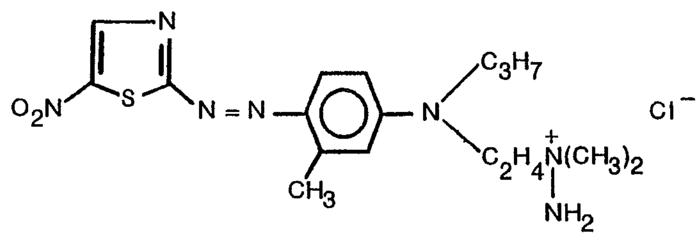 | Potassium Cyanate | Acetic Acid | Isopropanol/ water |
| 11 | 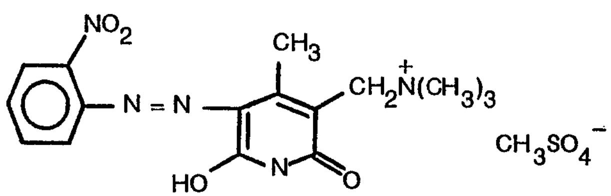 | Potassium Cyanate | Propionic Acid | 2-Methoxy ethanol |
| 12 | 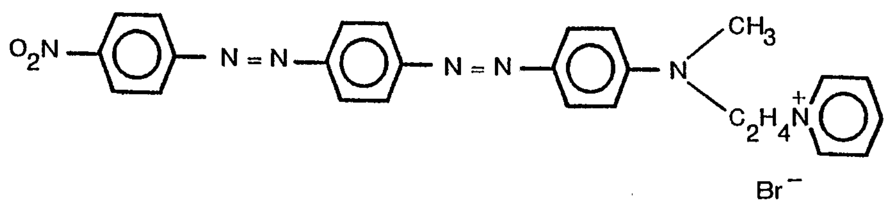 | Sodium Cyanate | Monochloro-acetic Acid | Ethylene glycol/ Sulpholane/ water |

| Example No. | Dye | Cyanate salt | Organic Acid | Solvent or Solvent Mixture |
|---|---|---|---|---|
| 13 | 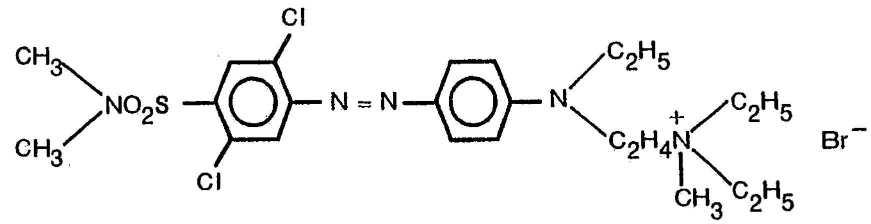 | Sodium Cyanate | Acetic Acid | Propylene glycol/ Sulpholane |
| 14 | 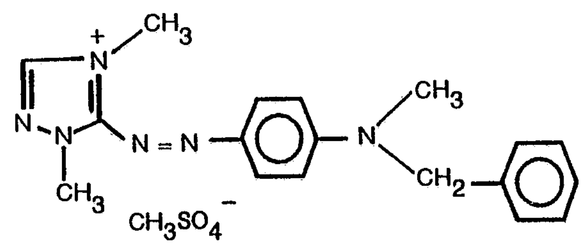 | Ammonium Cyanate | Formic Acid | 2-Methoxy-ethyl acetate/ water |
| 15 | 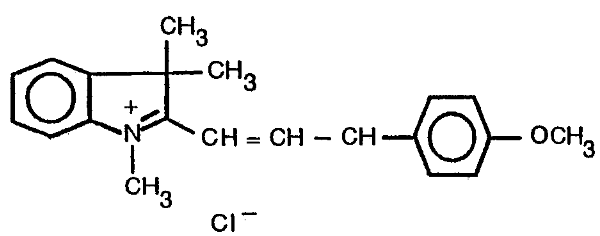 | Ammonium Cyanate | Acrylic Acid | Ethylene glycol/water |

| Example No. | Dye | Cyanate Salt | Organic Acid | Solvent or Solvent Mixture |
|---|---|---|---|---|
| 16 | 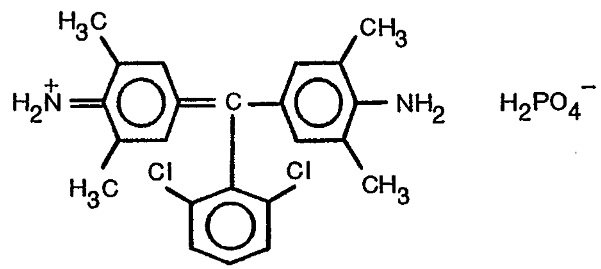 | Potassium Cyanate | Acetic Acid | Dimethyl-acetamide/water |
| 17 | 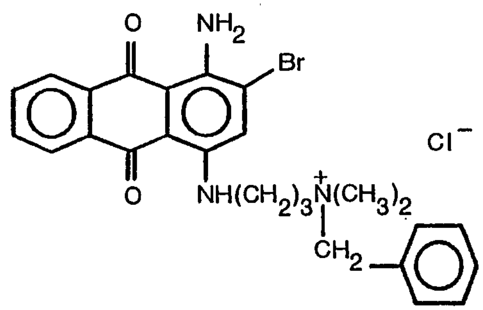 | Potassium Cyanate | Acetic Acid | Sulpholane/Benzyl alcohol/water |
| 18 | 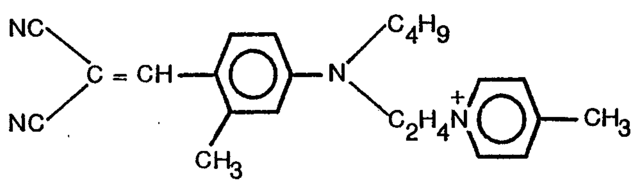 | Potassium Cyanate | Methane Sulphonic Acid | Sulpholane/water |

| Example No. | Dye | Cyanate Salt | Organic Acid | Solvent or Solvent Mixture |
|---|---|---|---|---|
| 19 | 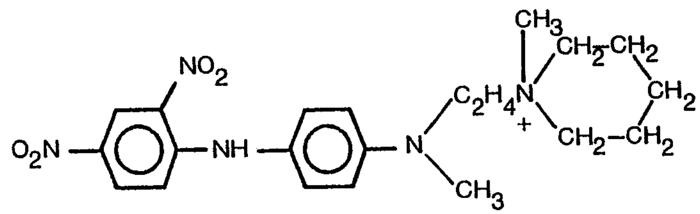 $Cl^-$ | Magnesium Cyanate | Succinic Acid | Propylene glycol |
| 20 | 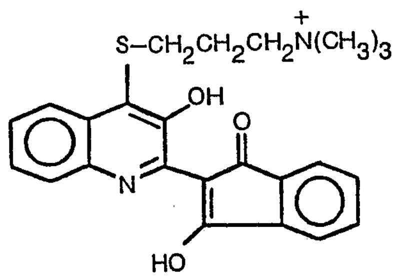 ½ $SO_4^{2-}$ | Ammonium Cyanate | Propionic Acid | Diethylene glycol Mono-methyl ether |
| 21 | 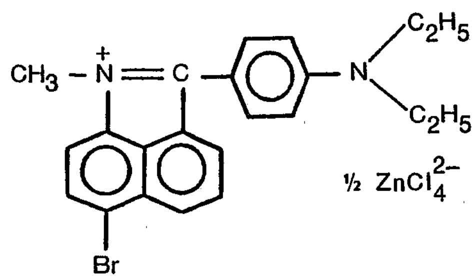 ½ $ZnCl_4^{2-}$ | Sodium Cyanate | Acetic Acid | Ethylene glycol/water |

**Claims**

1. Process for the preparation of a cationic dye in the form of a water-soluble solid or a concentrated solution characterized by
(a) preparing a cyanate of a cationic dye
(b) isolating the dye cyanate,
(c) reacting the dye cyanate with an organic acid to produce a solution of the cationic dye salt of the organic acid, and optionally
(d) converting the solution into a solid form.

2. Process according to claim 1 characterized in that the cationic dye is soluble or partly soluble in water or organic aqueous solutions.

3. Process according to claims 1 or 2 characterized in that the dye cyanate is prepared by reacting an aqueous or organic aqueous solution or suspension of a cationic dye salt with a water-soluble cyanate.

4. Process according to claim 3 characterized in that the water-soluble cyanate is ammonium, sodium or potassium cyanate.

5. Process according to claims 3 or 4 characterized in that the reaction with the water-soluble cyanate is carried out in water at a temperature of 15—80°C and at a concentration of cationic dye salt of 5—50% w/v.

6. Process according to any of claims 1 to 5 characterized in that the organic acid is a mono- or poly-carboxylic acid.

**Revendications**

1. Procédé de préparation d'un colorant cationique sous la forme d'un solide soluble dans l'eau ou d'une solution concentrée, caractérisé par
a) la préparation d'un cyanate d'un colorant cationique,
b) l'isolation du cyanate du colorant,
c) la réaction du cyanate du colorant avec un acide organique pour produire une solution du sel de colorant cationique de l'acide organique, et éventuellement
d) la conversion de la solution en une forme solide.

2. Procédé selon la revendication 1, caractérisé en ce que le colorant cationique est soluble ou partiellement soluble dans l'eau ou dans des solutions aqueuses organiques.

3. Procédé selon la revendication 1 ou la revendication 2, caractérisé en ce que le cyanate de colorant est préparé par la réaction d'une solution ou d'une suspension aqueuse ou organique aqueuse d'un sel du colorant cationique avec un cyanate soluble dans l'eau.

4. Procédé selon la revendication 3, caractérisé en ce que le cyanate soluble dans l'eau est le cyanate d'ammonium, de sodium ou de potassium.

5. Procédé selon la revendication 3 ou la revendication 4, caractérisé en ce que la réaction avec le cyanate soluble dans l'eau est effectuée dans l'eau à une température de 15 à 80°C et à une concentration en sel de colorant cationique de 5 à 50% en poids/volume.

6. Procédé selon l'une quelconque des revendications 1 à 5, caractérisé en ce que l'acide organique est un acide mono- ou poly-carboxylique.

**Patentansprüche**

1. Verfahren zur Herstellung eines kationischen Farbstoffs in Form eines wasserlöslichen Feststoffs oder einer konzentrierten Lösung, gekennzeichnet durch
a) Herstellen eines Cyanats eines kationischen Farbstoffs,
b) Isolieren des Farbstoff-Cyanats,
c) Umsetzen des Farbstoff-Cyanats mit einer organischen Säure zu einer Lösung des kationischen Farbstoffsalzes der organischen Säure, und gegebenenfalls
d) Umwandeln der Lösung in eine feste Form.

2. Verfahren nach Anspruch 1, dadurch gekennzeichnet, daß der kationische Farbstoff in Wasser oder organisch-wässrigen Lösungen löslich oder teillöslich ist.

3. Verfahren nach den Ansprüchen 1 oder 2, dadurch gekennzeichnet, daß das Farbstoff-Cyanat durch Umsetzen einer wässrigen oder organisch-wässrigen Lösung oder Suspension eines kationischen Farbstoffsalzes mit einem wasserlöslichen Cyanat hergestellt wird.

4. Verfahren nach Anspruch 3, dadurch gekennzeichnet, daß das Wasserlösliche Cyanat Ammonium-, Natrium- oder Kaliumcyanat ist.

5. Verfahren nach den Ansprüchen 3 oder 4, dadurch gekennzeichnet, daß die Umsetzung mit dem wasserlöslichen Cyanat in Wasser bei einer Temperatur von 15 bis 80°C und bei einer Konzentration an kationischem Farbstoffsalz von 5 bis 50 Gew.-/Vol.-% durchgeführt wird.

6. Verfahren nach irgend einem der Ansprüche 1 bis 5, dadurch gekennzeichnet, daß die organische Säure eine Mono- oder Polycarbonsäure ist.